# EUROPÄISCHE PATENTANMELDUNG

(11) **EP 1 980 827 A2**
(43) Veröffentlichungstag der Anmeldung: **15.10.2008**
(21) Anmeldenummer: 08007290.3
(22) Anmeldetag: 14.04.2008
(51) Int. Cl.: G01G 19/44, G01G 19/50

(54) **Waage**

(30) Priorität: 12.04.2007 DE 102007017574
(71) Anmelder: Soehnle Professional GmbH & Co. KG, 71540 Murrhardt (DE)
(72) Erfinder: Gerster, Stephan, 53342 Wachtberg-Pech (DE)
(74) Vertreter: Ullrich & Naumann

(57) **Zusammenfassung**

Eine Waage, insbesondere Personenwaage, umfasst eine Auflageeinrichtung (1) für ein zu wiegendes Gut oder eine zu wiegende Person und eine der Auflageeinrichtung (1) zugeordnete Bedien-/Anzeigeeinrichtung (2).

## Beschreibung

Die Erfindung betrifft eine Waage, insbesondere Personenwaage, mit einer Auflageeinrichtung für ein zu wiegendes Gut oder eine zu wiegende Person und einer der Auflageeinrichtung zugeordneten Bedien- und/oder Anzeigeeinrichtung.

Waagen, insbesondere Personenwaagen, sind aus der Praxis bekannt und existieren in den unterschiedlichsten Ausführungsformen. Dabei dient die Auflageeinrichtung zur Auflage des zu wiegenden Guts oder der zu wiegenden Person. Des Weiteren ist der Auflageeinrichtung eine Bedien- und/oder Anzeigeeinrichtung zugeordnet, an der bspw. der Wert des Gewichts des Guts oder der Person ablesbar ist.

Bei einer vorteilhaften Ausgestaltung der erfindungsgemäßen Waage ist die Bedien- und/oder Anzeigeeinrichtung von der Auflageeinrichtung abnehmbar.

Bei einer weiter vorteilhaften Ausgestaltung ist die Waage in einem Behälter, insbesondere Koffer, anordenbar.

Die erfindungsgemäße Waage ist mobil und kann durch Integration in einen Behälter oder Koffer sehr einfach überall hin mitgenommen werden. Dies ist insbesondere für medizinische Dienste, Weight Watchers und dergleichen vorteilhaft. Die Waage lässt sich vor allem auch im postoperativen Bereich zur Überwachung besonders gefährdeter Personen bzw. Risikogruppen einsetzen.

Die Waage könnte im Konkreten Bestandteil einer Kofferhälfte sein, wodurch sich eine Einsparung von Material und eine vereinfachte Montage ergeben.

Grundsätzlich ist es denkbar, dass die Auflageeinrichtung über ein Kabel mit der Bedien-/Anzeigeeinrichtung verbunden ist. In besonders vorteilhafter Weise ist die Auflageeinrichtung drahtlos mit der Bedien-/Anzeigeeinnchtung verbunden, nämlich bspw. per Funk-, Bluetooth- oder Infrarotsignalen. Jede beliebige drahtlose Möglichkeit zur Datenübertragung ist realisierbar.

In weiter vorteilhafter Weise umfasst die Auflageeinrichtung und/oder die Bedien-/Anzeigeeinrichtung einen Prozessor. Dabei sei angemerkt, dass bereits die Auflageeinrichtung einen Prozessor umfassen kann, der die Rohdaten aufbereitet und entsprechend an die Bedien-/Anzeigeeinrichtung weiterleitet. Der Bedien-/Anzeigeeinrichtung kann alternativ oder ergänzend ein weiterer Prozessor zugeordnet sein. Auch dieser Prozessor dient zur Aufbereitung der Daten, vor allem zum Datenmanagement, insbesondere zur weiteren Verarbeitung und zum Transfer der Daten. Die Bedien-/Anzeigeeindchtung kann darüber hinaus einen Datenspeicher zum geordneten Ablegen der Daten umfassen.

Der Prozessor umfasst in vorteilhafter Weise ein Programm zur Ermittlung, Anzeige, Aufbereitung/Verarbeitung und/oder Speicherung der Daten. Die so gewonnenen Daten können bspw. den Body Maß Index umfassen. Weitere Daten sind aufbereitbar und entsprechend ablegbar.

Des Weiteren ist der Speicher geeignet, Daten mehrerer Personen gleichzeitig bzw. nebeneinander abzulegen und zum Abruf bereit zu stellen. Entsprechend der Größe des Datenspeichers lassen sich die Daten beliebig vieler Personen ablegen.

In besonders vorteilhafter Weise ist mindestens eine weitere Messeinrichtung zur Ermittlung weiterer körperspezifischer Daten vorgesehen, d. h. zur Ermittlung von Daten zusätzlich zu den reinen Gewichtsdaten. Dabei könnte die weitere Messeinrichtung einen sog. Messstab zur Körperanalyse umfassen. Dabei handelt es sich letztendlich um ein Gerät zur Ermittlung von Körperdaten, insbesondere zur Ermittlung des Körperfetts, vorzugsweise mittels elektrischer Widerstandsmessung bzw. elektrischer Impedanzmessung. Auch lässt sich ein Gerät verwenden, welches das Köperfett mittels Near-Infrarot-Messung vornimmt.

Als weitere Messeinrichtung könnte - alternativ oder ergänzend - ein Messgerät zur Blutdruckmessung vorgesehen sein. Ebenso kann ein Messgerät zur Blutzuckermessung oder ein vorzugsweise kontaktlos arbeitendes Längenmessgerät zum Messen der Körperlänge vorgesehen sein. Auch lässt sich in besonders vorteilhafter Weise als weitere Messeinrichtung ein EKG-Gerät integrieren.

Es ist von weiterem Vorteil, wenn die Messdaten der Messeinrichtung dem Prozessor oder der Bedien-/Anzeigeeinrichtung und/oder einem externen Rechner zuführbar sind. Auch kann ein Drucker zum unmittelbaren Ausdrucken der aufbereiteten personenspezifischen Daten vorgesehen sein, so dass jeder Person nach erfolgter Messung ein Messprotokoll übergeben werden kann. Dies ist unabhängig von der Speicherung der personenspezifischen Daten.

In ganz besonders vorteilhafter Weise sind Mittel zur Datenübertragung, insbesondere zur Übertragung der gemessenen Rohdaten und/oder der aufbereiteten Daten, vorgesehen. Die Mittel zur Datenübertragung können eine Funk-/Telefonverbindung, bspw. mittels Handy, eine Bluetoothverbindung und/oder eine W-LAN-Verbindung umfassen. Die Datenübertragung kann grundsätzlich über das Internet oder sonstige Medien erfolgen.

In ganz besonders vorteilhafter Weise sind die Daten in der Bedien-/Anzeigeeinrichtung und/oder in einem externen Rechner analysierbar. Im Falle der Zuführung der Daten an bzw. in einen externen Rechner ist es von weiterem Vorteil, wenn diese Daten in ein medizinisches Zentrum oder dgl. übertragen werden. Entsprechende einer erfolgten Auswertung könnte eine vorzugsweise automatische Rückmeldung an die Bedien-/Anzeigeeinrichtung erfolgen. Liegen die Daten in einem akzeptablen, üblichen Band, könnte eine daraus resultierende Unbedenklichkeit mitgeteilt werden. Im Falle kritischer Daten könnte ein entsprechendes Signal übermittelt werden.

Von ganz besonderem Vorteil ist, wenn die Rückmeldung eine qualifizierte Diagnose umfasst. Bei kritischen Daten könnte wiederum eine automatische Meldung an einen Arzt, ein Krankenhaus, eine Rettungsleitzentrale oder einen Notdienst erfolgen. Auch könnte bei kritischen Daten ein vereinbarter Notplan aktivierbar sein.

Im Lichte der voranstehenden Ausführungen wird deutlich, dass die erfindungsgemäße Waage bei Vorkehrung zusätzlicher Messeinrichtungen und unter Zugrundelegung der erörterten Datenübertragung eine Art mobiles Analysezentrum mit Fernanalyse darstellt, wobei eine solche Einrichtung insbesondere unterwegs ein ganz erhebliches Maß an Sicherheit bietet.

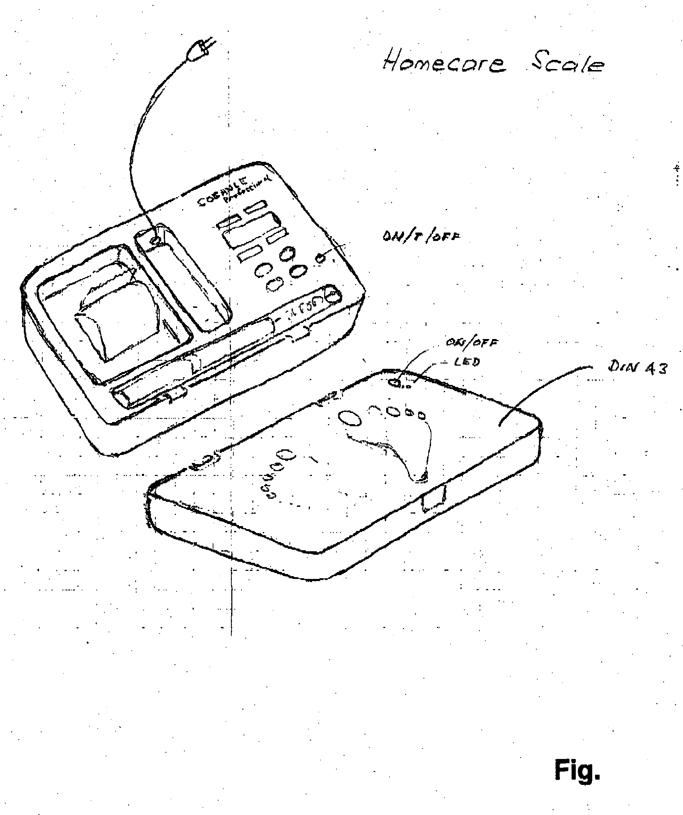

Es gibt nun verschiedene Möglichkeiten, die Lehre der vorliegenden Erfindung in vorteilhafter Weise auszugestalten und weiterzubilden, Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- die einzige Fig.: in einer schematischen Ansicht eine erfindungsgemäße Waage, mit den wesentlichen Bestandteilen, nämlich mit der Auflageeinrichtung und der zugeordneten Bedien-/Anzeigeeinrichtung.

Die Fig, zeigt in einer schematischen Ansicht eine erfindungsgemäße Waage zum Wiegen von Personen, wobei die Waage als wesentliche Bestandteile einer Auflageeinrichtung 1 und eine der Auflageeinrichtung 1 zugeordnete Bedien-/Anzeigeeinrichtung 2 umfasst.

Mittels der Bedien- und/oder Anzeigeeinrichtung könnte ein Ausdruck der Mess- und Analysewerte - bspw. Fett-, Wasser-, Muskelanteil, Pulsfrequenz und Energieumsatz - zur besseren Übersicht und Archivierung möglich sein. Die Auflageeinrichtung und die Bedien- und/oder Anzeigeeinrichtung könnten über eine Funkverbindung oder optische Verbindung miteinander kommunizieren, um beliebige Daten zu übertragen. In diesem Fall liegt keine Kabelbindung vor und ein Benutzer kann die auch als Terminal bezeichenbare Bedien- und/oder Anzeigeeinrichtung frei im Raum bewegen und anordnen.

Eine Funkverbindung oder optische Verbindung könnte auch zum Übertragen der Daten zu einer EDV-Anlage, zu einem Netzwerk u.s.w. verwendet werden. Die Bedien- und/oder Anzeigeeinrichtung und die Auflageeinrichtung, die in Form einer Waagenplattform realisiert sein könnte, könnten mit einer Batterie oder einem Akku betrieben werden. Hierdurch ergibt sich eine Ortsunabhängigkeit der Komponenten. Optional könnte eine Kabelverbindung zwischen der Auflageeinrichtung und der Bedien- und/oder Anzeigeeinrichtung realisierbar sein.

Der Deckel eines Behälters bzw. Koffers könnte abnehmbar sein.

Eine Analysemessung bspw. der Körperimpedanz könnte über die Hände erfolgen, woraus sich der Vorteil ergibt, dass eine Person die Füße nicht freimachen muss.

Hinsichtlich weiterer vorteilhafter Ausgestaltungen der erfindungsgemäßen Waage wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Waage lediglich zur Erörterung der beanspruchten Lehre dient, diese jedoch nicht auf das Ausführungsbeispiel einschränkt.

### Bezugszeichenliste

- 1: Auflageeinrichtung
- 2: Bedien-/Anzeigeeinrichtung

## Patentansprüche

1. Waage, insbesondere Personenwaage, mit einer Auflageeinrichtung (1) für ein zu wiegendes Gut oder eine zu wiegende Person und einer der Auflageeinrichtung (1) zugeordneten Bedien-/Anzeigeeinrichtung (2).

2. Waage nach Patentanspruch 1, **dadurch gekennzeichnet, dass** die Bedien-/Anzeigeeinrichtung (2) von der Auflageeinrichtung (1) abnehmbar oder von dieser getrennt ist.

3. Waage nach Patentanspruch 1 oder 2, **dadurch gekennzeichnet, dass** die Waage in einem Behälter, insbesondere in einer Tasche oder in einem Koffer, anordenbar ist, wobei
die Bedien-/Anzeigeeinrichtung (2) einer Schalenhälfte des Koffers zugeordnet sein kann.

4. Waage nach einem der Ansprüche 1 bis 3, **dadurch gekennzeichnet, dass** die Auflageeinrichtung (1) über ein Kabel mit der Bedien-/Anzeigeeinrichtung (2) verbunden ist, oder
dass die Auflageeinrichtung (1) drahtlos, insbesondere per Funk-, Bluetooth- oder Infrarotsignale mit der Bedien-/Anzeigeeinnchtung (2) verbunden ist.

5. Waage nach einem der Ansprüche 1 bis 4, **dadurch gekennzeichnet, dass** die Auflageeinrichtung (1) und/oder die Bedien-/Anzeigeeinrichtung (2) ein Prozessor umfasst, wobei
der Prozessor ein Programm zur Ermittlung, Anzeige, Aufbereitung/Verarbeitung und/oder Speicherung der Daten umfassen kann, wobei
die Daten den Body Maß Index umfassen können und/oder wobei
der Speicher geeignet ist, Daten mehrerer Personen abzulegen und zum Abruf bereitzustellen.

6. Waage nach einem der Ansprüche 1 bis 5, **dadurch gekennzeichnet, dass** mindestens eine weitere Messeinrichtung zur Ermittlung weiterer körperspezifischer Daten vorgesehen ist, wobei
es sich bei der weiteren Messeinrichtung um einen Messstab zur Körperanalyse,handelri kann, wobei
als weitere Messeinrichtung ein Gerät zur Ermittlung von Körperdaten, insbesondere zur Ermittlung des Körperfetts, vorzugsweise mittels elektrischer Widerstandsmessung oder elektrischer Impedanzmessung oder mittels Near-Infrarot-Messung, vorgesehen sein kann, wobei
als weitere Messeinrichtung ein Messgerät zur Blutdruckmessung und/oder
zur Blutzuckermessung vorgesehen sein kann, wobei
als weitere Messeinrichtung ein vorzugsweise kontaktlos arbeitendes Längenmessgerät zum Messen der Körperlänge vorgesehen sein kann und/oder wobei
als weitere Messeinrichtung ein EKG vorgesehen sein kann.

7. Waage nach einem der Ansprüche 1 bis 6, **dadurch gekennzeichnet, dass** die Messdaten der Messeinrichtungen dem Prozessor der Bedien-/Anzeigeeinrichtung (2) und/oder einem externen Rechner zuführbar sind.

8. Waage nach einem der Ansprüche 1 bis 7, **dadurch gekennzeichnet, dass** ein Drucker zum Ausdrucken der aufbereiteten personenspezifischen Daten vorgesehen ist.

9. Waage nach einem der Ansprüche 1 bis 8, **dadurch gekennzeichnet, dass** Mittel zur Datenübertragung, insbesondere zur Übertragung der gemessenen Rohdaten und/oder der aufbereiteten Daten, vorgesehen sind, wobei
die Mittel zur Datenübertragung eine Funk-/Tetefonverbindung, eine Bluetoothverbindung und/oder eine W-LAN-Verbindung umfassen und/oder wobei
die Datenübertragung über das Internet erfolgt und/oder wobei
die Daten in der Bedien-/Anzeigeeinrichtung (2) und/oder in einem externen Rechner analysierbar sind.

10. Waage nach Anspruch 20, **dadurch gekennzeichnet, dass** die Daten in ein medizinisches Zentrum oder dgl. übertragbar sind, wobei
entsprechend einer erfolgten Auswertung eine vorzugsweise automatische Rückmeldung an die Bedien-/Anzeigeeinrichtung (2) erfolgen kann, wobei
die Rückmeldung eine qualifizierte Diagnose umfassen kann, wobei
bei kritischen Daten eine automatische Meldung an einen Arzt, ein Krankenhaus, eine Rettungsleitzentrale oder einen Notdienst erfolgen kann und/oder wobei
bei kritischen Daten ein vereinbarter Notplan aktivierbar ist.
